# EUROPEAN PATENT APPLICATION

(11) **EP 2 821 949 A2**
(43) Date of publication of application: **07.01.2015**
(21) Application number: 14175660.1
(22) Date of filing: 03.07.2014
(51) Int. Cl.: G06Q 20/40, G07F 17/32, G06F 3/00, G06K 19/00

(54) **Sensor for reading an identity code and gaming machine**

(30) Priority: 05.07.2013 US 201361843065 P
(71) Applicant: DR Gaming Technology Europe NV, 8300 Knokke (BE)
(72) Inventor: De Munck, Jurgen, 8300 Knokke (BE); Van Dam, Michiel, 8300 Knokke (BE)
(74) Representative: Schwarz & Partner

(57) **Abstract**

A sensor (10, 40) comprises reading means (100) for reading an identity code (ID) from a data carrier (110) or scanning a unique feature of a human body, such as a finger print. The sensor (10, 40) additionally comprises an electrical circuit (20, 400) for detecting a touch or a proximity of a part (9) of a human body. The electrical circuit generates a detecting signal (DS) upon touch detection. An electronic gaming machine (1) comprising the sensor (10, 40) identifies an account (5) associated with the identity code (ID) or the unique feature of a human body. After having received the identity code (ID) or the unique feature of a human body from the sensor (10, 40) the gaming machine (1) registers to the associated account (5) and upon registration accepts detecting signals (DS) from the sensor as money booking commands.

## Description

The invention relates to a sensor having reading means for reading an identity code from a data carrier or scanning a unique feature of a human body, such as a finger print. Such sensors are widely used for identifying a person or object, particularly in connection with electronic money booking routines.

One example of such a sensor is an iButton reader which is adapted to read unique serial numbers from an iButton®. An iButton is an electronic integrated circuit manufactured and marketed by Dallas Semiconductor Corp. and Maxim Integrated. It comprises an electronic memory chip, such as a ROM, an NVRAM, an EPROM and the like, which stores a serial number unique for each device. This unique serial number is used as an identity code. The iButton further comprises a microcontroller and a so called 1-wire interface. The 1-wire interface is a device communications bus system designed by Dallas Semiconductor Corp. that provides low-speed data, signalling, and power over a single signal. One distinctive feature of the 1-wire interface is that it uses only two lines, namely a data communication and voltage supply line and a ground line. The iButton has a metallic housing that comprises two parts which are electrically isolated from each other. A first part of the housing constitutes a contact area of the data communication and voltage supply line. The second part of the housing constitutes a contact area of the ground line. The iButton reader comprises a receptacle for the iButton having two contacts that are located such that they contact the contact areas of the iButton when it is located in the receptacle. The contacts of the iButton reader are connected with electronic circuitry that provides for supplying the iButton with electric power and for reading the unique serial number from the iButton.

Another example of such a sensor is an RFID reader being adapted to read an identity code from an RFID tag. Other examples of such sensors comprise a magnetic reader being adapted to read an identity code from a magnetic strip provided on a card, and an optical reader being adapted to read an optical identity code stored on an optical substrate, which optical identity code may comprise a one-dimensional or two-dimensional bar code printed on the substrate. Yet another example of such a sensor comprises a finger-print reader being adapted to scan a finger-print of a person.

The above-described sensors are also used in electronic gaming machines, particularly for identifying a player and a player's account by means of an identity code read by the sensor.

There are countries, such as the Netherlands, where cashless booking is only allowed in small steps, e.g. in steps of 2 EUR. That makes booking of money to gaming machines by means of data carriers, such as the above-described iButtons, uncomfortable. In general there might be regulations which allow cashless operation of gaming machines only with increments similar to the values of coins.

The present invention seeks to make playing gaming machines with the above limitations more comfortable to the player. The present invention further seeks to achieve this goal by providing a solution that can be integrated in existing sensors for reading identity codes or scanning a unique feature of a human body.

According to the present invention a sensor having reading means for reading an identity code from a data carrier or scanning a unique feature of a human body, such as a finger print, is additionally equipped with an electrical circuit for detecting a touch or a proximity of a part of a human body, wherein the electrical circuit generates a detecting signal each time when the touch or proximity of a part of a human body is detected.

With such an additional circuit a standard sensor can be upgraded for booking money (e.g. in Netherlands in 2 € steps) by tipping with e.g. a finger on the sensor or by finger sweeping over the sensor. Touching or approximating the sensor produces a detecting signal, which can be handled in a gaming system in the same way as a signal from a coin acceptor or coin validator used in non-cashless gaming machines. Using the inventive sensor the following improvements over physical coin-in devices are achieved:
- The sensor is not prone to wear and tear compared to a coin validator device.
- The sensor brings back to the user the analogue feeling of throwing coins onto a cashless system.
- Money bookings can be made faster.
- The solution is more secure towards fraud (e.g. coin jo-jo's are not possible anymore).

In an aspect of the invention an electronic gaming machine is equipped with such an inventive sensor. The gaming machine is adapted to identify an account associated with the identity code or the unique feature of a human body read or scanned by the reading means. In other words: the standard functionality of the sensor is used for log-in and to initiate the money booking routine. After having received the identity code or the unique feature of a human body from the sensor, the gaming machine registers to the associated account and upon registration accepts detecting signals from the sensor as money booking commands by using the additional features of the sensor.

To end the function as booking automate the gaming machine will stop accepting detecting signals as money booking commands when it receives another reading of the identity code or unique feature of the human body from the sensor, or when it receives a timeout signal from a timeout counter, or when it receives a signal from a dedicated termination/cashout button.

The reading means of the sensor can be configured to read the identity code in a contacting or non-contacting manner, wherein the data carrier has the identity code stored in either an electronic memory chip or a magnetic strip or an optical substrate.

In a preferred embodiment of the invention the electrical circuit is configured to detect the touch or proximity of a part of a human body by measuring electrical effects, such as a change in electrical resistance or electrical capacitance, or optical effects, or mechanical effects, such as actuating a switch or variation of a pressure, which effects are induced by the touch or proximity of the part of the human body. When electrical effects are used for detecting the touch or proximity of a part of a human body it is preferred that the sensor comprises two electrically conducting parts, such as metal parts, being isolated from each other, and the electrical circuit is connected to the electrically conducting parts, wherein the electrical circuit measures a change in electrical resistance or electrical capacitance between the two electrically conducting parts that occurs when both electrically conducting parts are touched by a part of a human body. By configuring the sensor in this way standard data carriers, such as iButtons, can be used.

A very simple yet reliable interface of the sensor to the data carrier is provided, when the first one of the electrically conducting parts is configured as a data transmission and voltage supply line, and the second one of the electrically conducting parts is configured as a ground line, wherein the two electrically conducting parts are adapted for being connected with two contacts of the data carrier.

For signaling the status of the sensor status-indicating visual means, such as LEDs, are suggested. For instance, a LED with a first color, e.g. green, represents an idle state of the sensor. When the sensor is used in a standard manner such as reading an iButton, the LED color changes e.g. to red during the processes of getting the identity code and booking money from the account assigned to the identity code to the gaming machine.

When using an iButton reader as reading means of the sensor which iButton reader has an electrically conductive outer ring and an electrically conductive area isolated from the outer ring, wherein the electrical circuit is connected to the outer ring and the conductive area, respectively, touching both the outer ring and the conductive area at the same time with a human finger closes a circuit of the electrical circuit resulting in a flow of electric current. The resulting current is detected and a detecting signal is generated that is used for booking a fixed or configurable amount of money from the user account to the gaming machine.

In another embodiment of the invention disturbing electrical signals induced into the iButton reader by a human body, when the human body is electrically connected to the reader (= putting a finger on metallic contacts of reader) is detected. For this function another LED light color should be used, e.g. white.

Usual LED colors at iButton readers used for gaming machines (e.g. from RGB LED) are:
- Green: The gaming machine is in an idle state, ready for the next player.
- Red: The gaming machine is occupied by a player.
- Purple: Fail function.
- White flash: Credit transfer (money is being booked from the player's account to the gaming machine, or game winnings are being transferred to the player's account, etc.).

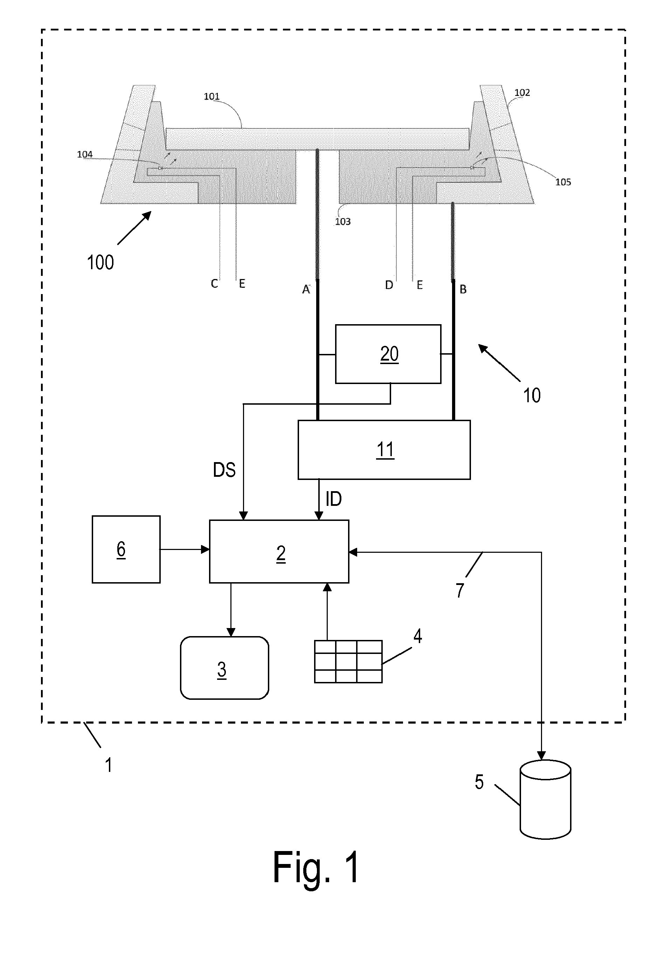

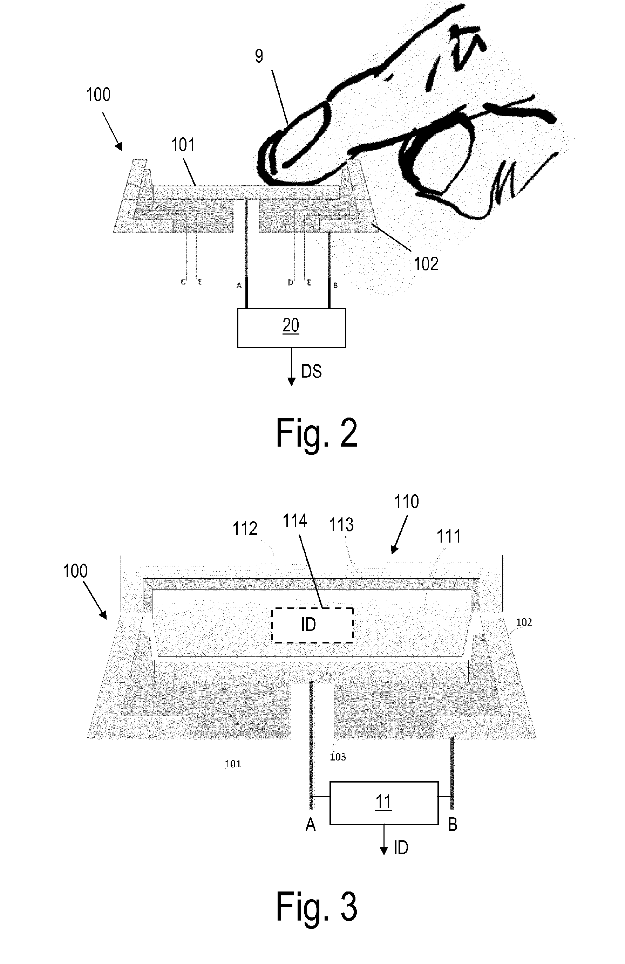

Action steps of the gaming machine (mentioned LED colors are examples in a non-limiting way) comprise:
1. The gaming machine shows the idle state having the green LED activated.
2. The player uses his personal iButton to register at the gaming machine (reading of the identity code, i.e. the account ID, by the iButton reader). A first portion of money can be booked from the player's account to the gaming machine. During this procedure the red LEDs are activated.
3. The player can book portions of money to the gaming machine by tipping e.g. with one of his fingertips or by tipping with any electrically conducting subject on the iButton reader in such a way that the two metal parts of the iButton reader (see Fig.1 and Fig.2) are connected with each other. At each registered finger or object tipping the white LEDs flash, while in the periods between tipping the red LEDs are activated to indicate the gaming machine as reserved for the player.
4. As long as the player is registered at the gaming machine he can add additional money portions via touching the iButton reader in the above described manner.
5. The session can be finished either by putting the iButton on the reader or by pressing the cash out-button of the gaming machine or by a gaming system defined timeout.
6. After the session has been finished the gaming machine shows again the idle state having the green LED activated.

The invention will now be explained in detail with reference to the drawings.
Fig. 1 shows a schematic view of a sensor according to the invention having reading means configured as an iButton reader.
Fig. 2 shows the sensor of Fig. 1 and the use of a fingertip to generate a contact between two metallic areas of the iButton reader.
Fig. 3 schematically shows the iButton reader of Fig. 1 with an inserted iButton data carrier.
Fig. 4 shows different states of the system and the possibilities for changing the states.
Fig. 5 schematically shows another embodiment of a sensor according to the invention.

Fig.1 shows a schematic view of a sensor 10 according to the invention. The sensor 10 comprises reading means 100 configured as an iButton reader. The reading means 100 comprises two electrically conducting metallic parts 101, 102 that are isolated from each other by means of a transparent isolating material 103. In the transparent isolating material 103 there are embedded LEDs 104, 105 having different colors as commonly used. Contact lines A and B are the contact lines of a 1-wire communication interface 11 of the iButton reader. Contact line A is connected to the metallic part 101 and constitutes a data transmission and voltage supply line. Contact line B is connected to the metallic part 102 and constitutes a ground line. The 1-wire communication interface 11 is configured according to the iButton standard and therefore needs no further explanation. Contact lines C and E are the contacts for LED 104, with contact line E being a ground contact. Contact lines D and E are the contacts for LED 105, with contact lines E being a ground contact. Contact lines C and D are used to switch the LEDs 104 and 105 on and off.

Contact lines A and B are further connected to an electrical circuit 20 for detecting a touch or a proximity of a part of a human body, wherein the electrical circuit 20 generates a detecting signal DS each time when the touch or proximity of a part of a human body is detected. Fig. 2 shows the use of a fingertip 9 to create a contact between the two metallic parts 101 and 102. The contact lines A and B are used for signaling the created contact to the electric circuit 20, which is configured to detect that a conducting material (here a part of the player's body) is connecting the metallic parts 101, 102. There are several methods available for detecting, e.g. measuring currents, measuring resistance, measuring capacity, interfering voltage, other interfering signals, etc.

Turning back to Fig. 1 it is schematically shown in this figure that the sensor 10 is incorporated in an electronic gaming machine 1. The gaming machine 1 comprises a gaming processor 2 that is connected to the 1-wire communication interface 11 and the electrical circuit 20 for detecting a touch or a proximity of a part of a human body. The gaming processor 2 is further connected to a display 3, dedicated buttons 4, a money inserting/validating device 6 and a network interface 7 for communication with a player's account 5. The gaming machine 1 may comprise further devices and means that are well-known to those skilled in the art and therefore do not require specific explanation.

Fig. 3 shows a data carrier 110 configured as an iButton that is inserted in the reading means 100 of the sensor 10 (Fig. 1). For the sake of simplicity the LEDs and their contact lines have been omitted from this drawing. The data carrier 110 comprises a housing that comprises a first electrically conducting part 111 and a second electrically conducting part 112 being isolated from the first electrically conducting part 111 by means of an isolating material 113. Within the data carrier 110 there is provided an electronic memory chip 114 that has a unique identity code ID stored. The memory chip 114 is connected (not shown) to both electrically conducting parts 111, 112 of the data carrier 110. When the data carrier 110 is fully inserted in the receptacle of the reading means 100 the first electrically conducting part 111 of the data carrier 110 gets into contact with the first metallic part 101 of the reading means 100 and the second electrically conducting part 112 of the data carrier 110 gets into contact with the second metallic part 102 of the reading means 100. Thus the electronic memory chip 114 can be provided with supply voltage and its identity code ID can be read by the 1-wire interface 11 of the reading means 100 via the contact lines A and B.

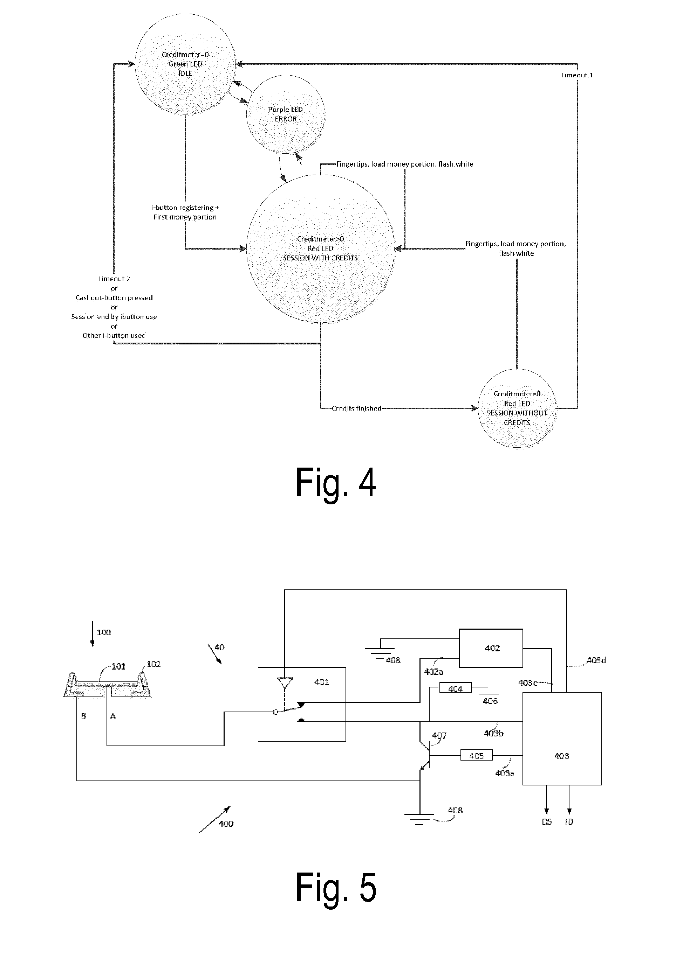

Fig. 4 shows the different states of the gaming machine 1 (Fig. 1) and the possibilities for changing the states.
- IDLE STATE (green LED on, credit meter = 0) can be changed to ACTIVE SESSION STATE by using the iButton or can be changed to ERROR STATE (purple LED) in case of error.
- SESSION WITH CREDITS STATE (red LED, credit meter>0) can be changed to IDLE STATE by either a TIMEOUT 2, which is defined by the gaming system as a defined time after which the session stops and the credits are booked back to the player's account, when the player stops playing without any action, or when the player presses the cash-out button or uses their iButton to end the gaming session or if any iButton which is not registered at the gaming machine in the moment is held on the reader.
   SESSION WITH CREDITS STATE (red LED, credit meter>0) can be changed to SESSION WITHOUT CREDITS STATE (red LED, credit meter=0) when all credits are finished.
   SESSION WITH CREDITS STATE (red LED, credit meter>0) can be changed to (purple LED) in case of error.
   SESSION WITH CREDITS STATE (red LED, credit meter>0) can be interrupted by money portion to account booking via finger tipping (white LED flashing)
- SESSION WITHOUT CREDITS STATE (red LED, credit meter=0) can be changed to SESSION WITH CREDITS STATE (red LED, credit meter>0) by money portion to account booking via finger tipping (white LED flashing)
   SESSION WITHOUT CREDITS STATE (red LED, credit meter=0) can be changed to IDLE STATE (green LED, credit meter=0) by a TIMEOUT 1, which is defined by the gaming system as a defined time, after which the session stops when the credit meter has become 0.
- ERROR STATE can be changed to IDLE or SESSION WITH CREDITS STATE by error handling.

The whole procedure of counting the number of touches of the contact areas of an iButton reader can also be applied to iButton readers without light signals. There is just no optical feedback for the user about the acceptance of the touch by the electrical circuit for detecting a touch or a proximity of a part of a human body counting system.

There might be an acoustic feedback by additional components.

Fig. 5 schematically shows another embodiment of a sensor 40 according to the invention. The sensor 40 comprises the same kind of reading means 100 configured as an iButton reader as the sensor 10 (Fig. 1) that has been described above. Therefore the same numerals have been used to depict same or similar parts. The sensor 40 differs from the above described sensor 10 in that the 1-wire communication interface and the electrical circuit for detecting a touch or a proximity of a part of a human body are integrated in an electric circuit 400. A processor 403 is the heart of the electric circuit 400. It controls the function of the electric circuit (i.e. acting as a 1-wire communication interface or acting as an electrical circuit for detecting a touch or a proximity of a part of a human body) by controlling an analog switch 401 via an output connection line 403d. The analog switch 401 has an input that is connected to the metallic part 101 of the reading means 100. The input of the analog switch 401 is alternately switchable to two outputs that are connected to a processor input 403b and an input 402a of a resistance measurement circuit 402, respectively. The resistance measurement circuit 402 is also connected to ground 408. The output of the resistance measurement circuit 402 is connected to a processor input 403c. The processor input 403b is connected via a pull-up resistor 404 to a supply voltage 406 (e.g. 5 V DC). The processor input 403b is further connected to the collector input of a transistor 407. The emitter output of the transistor 407 is connected to ground 408. The base of the transistor 407 is connected via a resistor 405 to a processor input 403a. In idle state of the reading means 100 the processor 403 switches the output-signal A from the reading means 100 in high frequency between the processor input 403b and the resistance measurement input 402a. The processor 403 uses its processor output 403d signal for switching.

In the idle state of the reading means only air is between the contact surfaces 101, 102 of the reading means 100, resulting in very high (almost infinite) resistance values for the resistance measurement circuit 402. As long as the resistance measurement circuit 402 delivers high resistance values to the processor (403) the processor continues in switching the signal on output 403d.

When an iButton gets into contact with the contact surfaces 101, 102 of the reading means 100 the processor 403 carries out the 1-wire communication with the reading means 100 and reads the identity code ID stored in the iButton for further use. When the communication between the reading means 100 and the processor 403 is finished the processor 403 starts switching the analog switch 401.

In another embodiment of the invention the switching of the analog switch 401 takes only place in the time period between log-in and log-out of the player account.

When a finger of a user (or another electrically conductive part) short-circuits the contact surfaces 101, 102 of the reading means 100 a considerable reduction of resistance can be detected by the resistance measurement circuit 402. When the processor 403 receives reduced values of resistance from the resistance measurement circuit 402 it keeps on switching, but counts each drastically lowered value of the measured resistance as one fingertip upon the reading means 100 and generates the detection signal DS for further use. The detection signal DS can be a digital number or a pulse signal, etc.

## Claims

1. A sensor (10, 40) having reading means (100) for reading an identity code (ID) from a data carrier (110) or scanning a unique feature of a human body, such as a finger print, **characterized in that** the sensor (10, 40) additionally comprises an electrical circuit (20, 400) for detecting a touch or a proximity of a part (9) of a human body, wherein the electrical circuit generates a detecting signal (DS) each time when the touch or proximity of a part of a human body is detected.

2. The sensor according to claim 1, **characterized in that** the reading means (100) of the sensor (10, 40) is configured to read the identity code (ID) in a contacting or non-contacting manner, wherein the data carrier (110) has the identity code stored in either an electronic memory chip (114) or a magnetic strip or an optical substrate.

3. The sensor according to claim 1 or claim 2, **characterized in that** the electrical circuit (20, 400) is configured to detect the touch or proximity of a part of a human body by measuring electrical effects, such as a change in electrical resistance or electrical capacitance, or optical effects, or mechanical effects, such as actuating a switch or variation of a pressure, which effects are induced by the touch or proximity of the part of the human body.

4. The sensor according to claim 3, **characterized in that** the sensor (10, 40) comprises two electrically conducting parts (101, 102), such as metal parts, being isolated from each other, and the electrical circuit (10, 400) is connected to the electrically conducting parts, wherein the electrical circuit measures a change in electrical resistance or electrical capacitance between the two electrically conducting parts that occurs when both electrically conducting parts are touched by a part (9) of a human body.

5. The sensor according to claim 4, wherein a first one (101) of the electrically conducting parts is connected to a data transmission and voltage supply line (A), and wherein the second one (102) of the electrically conducting parts is connected to a ground line (B), wherein the two electrically conducting parts are adapted for being connected with two contacts (111, 112) of the data carrier (110).

6. The sensor according to any of the previous claims, **characterized by** status-indicating visual means, such as LEDs (104, 105).

7. An electronic gaming machine (1), **characterized by** a sensor (10, 40) according to any of the previous claims, wherein the gaming machine is adapted to identify an account (5) associated with the identity code (ID) or the unique feature of a human body read or scanned by the reading means (100), wherein the gaming machine (1) after having received the identity code (ID) or the unique feature of a human body from the sensor (10, 40) registers to the associated account (5) and upon registration accepts detecting signals (DS) from the sensor as money booking commands.

8. The electronic gaming machine, **characterized in that** the gaming machine (1) stops accepting detecting signals as money booking commands when it receives another reading of the identity code or unique feature of the human body from the sensor, or when it receives a timeout signal from a timeout counter, or when it receives a signal from a dedicated termination button (4).
